(19) Europäisches Patentamt
European Patent Office
Office européen des brevets

(11) **EP 1 277 606 B1**

(12) **EUROPEAN PATENT SPECIFICATION**

(45) Date of publication and mention
of the grant of the patent:
**26.01.2005 Bulletin 2005/04**

(51) Int Cl.⁷: **B60H 1/00**

(21) Application number: **02253017.4**

(22) Date of filing: **29.04.2002**

(54) **Vehicular air conditioning apparatus**

Fahrzeugklimaanlage

Dispositif de climatisation d'un véhicule

(84) Designated Contracting States:
**DE FR**

(30) Priority: **17.07.2001 JP 2001216448**

(43) Date of publication of application:
**22.01.2003 Bulletin 2003/04**

(73) Proprietor: **Sanden Corporation**
**Isesaki-shi, Gunma 372-8502 (JP)**

(72) Inventors:
 • **Suzuki, Kenichi, Sanden Corporation**
 **Isesaki-shi, Gunma 372-8502 (JP)**
 • **Sugawara, Kei Sanden Corporation**
 **Isesaki-shi, Gunma 372-8502 (JP)**
 • **Inoue, Atuo Sanden Corporation**
 **Isesaki-shi, Gunma 372-8502 (JP)**

(74) Representative: **Haley, Stephen**
**Gill Jennings & Every,**
**Broadgate House,**
**7 Eldon Street**
**London EC2M 7LH (GB)**

(56) References cited:
**EP-A- 0 177 404        US-A- 4 893 480**
**US-A- 5 765 383**

 • **PATENT ABSTRACTS OF JAPAN vol. 011, no.**
 **347 (M-641), 13 November 1987 (1987-11-13) & JP**
 **62 125910 A (NIPPON DENSO CO LTD), 8 June**
 **1987 (1987-06-08)**
 • **PATENT ABSTRACTS OF JAPAN vol. 011, no.**
 **064 (M-565), 26 February 1987 (1987-02-26) & JP**
 **61 220909 A (NIPPON DENSO CO LTD), 1**
 **October 1986 (1986-10-01)**

**Description**

The present invention relates to a vehicular air conditioning apparatus. More particularly this invention relates to a vehicular air conditioning apparatus that makes the room temperature change along an orbit of model response. A similar apparatus is described by the document US 4 893 480, which also discloses the preamble to claim 1.

Generally, a vehicular air conditioning apparatus comprises mainly an air duct having a fan, a refrigeration circuit that cools the air flowing through the air duet, an engine cooling water circuit that heats the air flowing through the air duct, and a main controller.

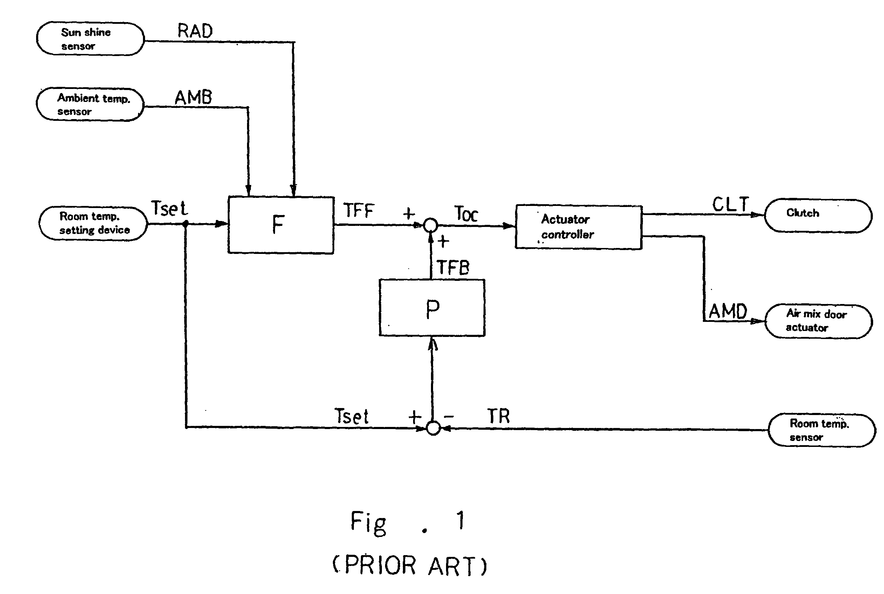

In a known vehicular air conditioning apparatus, a control such as shown in Fig. 1 is generally conducted. With reference to Fig. 1, a signal RAD issued from a sun shine sensor, a signal AMB issued from an ambient temperature sensor and a signal Tset issued from a room temperature setting device are inputted to a box F (Feed forward). The box F, processing these signals, outputs a signal TFF. A signal TFB outputted from a box P is a feedback signal for correction. An objective discharge air temperature Toc of the vehicular air conditioning apparatus is given by a sum of the signals TFF and TFB. The objective discharge air temperature Toc is so calculated as to make an actual room temperature approach a set room temperature Tset. The objective discharge air temperature Toc is inputted to an actuator controller. The actuator controller outputs a signal CLT that controls a clutch of a compressor and a signal AMD that controls an air mix door in the air duct so as to make the actual discharge air temperature become the objective discharge air temperature Toc. Thus, once an objective room temperature Tset is set in the room temperature setting device, then an air having a temperature of about Toc is blown from discharge ports of the vehicular air conditioning apparatus. As a result, the actual room temperature gradually approaches the objective room temperature Tset.

However, it needs a certain time for the actual room temperature to reach the objective room temperature Tset. Further, depending on the thermal condition in the vehicle, it can happen that the actual room temperature becomes a temperature other than the objective room temperature Tset which is intended to be brought by discharging the air having the targeted temperature Toc. In the control of Fig. 1. a difference between the objective room temperature Tset and the actual room temperature TR issued from a room temperature sensor is inputted to the box P (proportional control) in order to correct the difference between them. In the box P, the feedback signal TFB is calculated as a function of the difference Tset-TR.

$$TFB=G. (Tset-TR)$$

The coefficient G is the gain of the feedback. If the gain G is set to have a big value, then the actual room temperature TR changes rapidly to approach the objective room temperature Tset. If the gain G is set to have a small value, then the actual room temperature TR. changes slowly to approach the objective room temperature Tset. However, the conventional control of Fig. 1 has following problems.

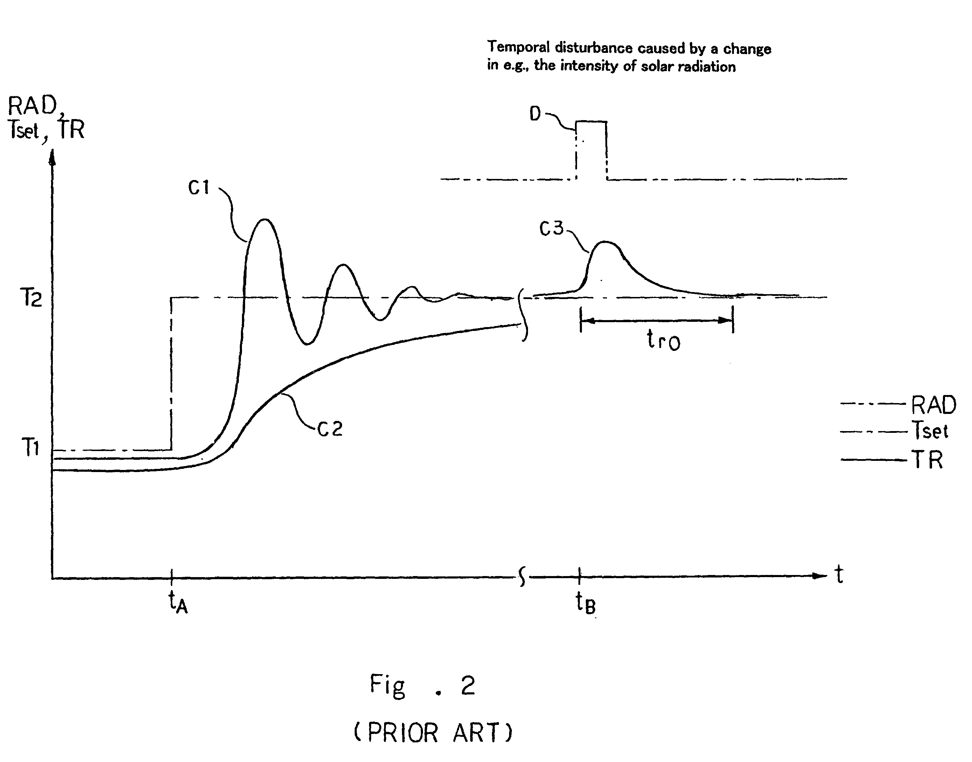

In Fig. 2, a graph of a response characteristic exhibited by the control of Fig. 1 is shown. The ordinate is the temperature and an intensity of solar radiation, and the abscissa is the time. We assume that at time $t_A$ the objective room temperature is changed from T1 to T2. If the feedback gain G is great, the room temperature $\overline{TR}$ will approach the new objective room temperature T2 quickly. However, in practice, the actual temperature TR will approach the objective room temperature T2 repeating oscillations after exceeding it once, as illustrated by the curve C1. This undesirable phenomenon is called hunting.

On the contrary, if the feed back gain G is small, the actual room temperature TR will approach the objective temperature T2 too slowly as shown by the curve 02. This response is also undesirable.

A critical response curve which may exist between the curves C1 and C2 approaches the objective temperature T2 most quickly. In actual design, to determine an exact value of the feedback gain that gives the critical response curve is difficult. Further, even if the exact value of the feedback gain that gives the critical curve can be determined, in practice, the set gain G acts as if it is greater or smaller for the critical curve to occur, depending on the thermal condition in the vehicle compartment, making the actual change in the room temperature TR vary along either curves C1 or C2. Thus, it is difficult to let the room temperature change along a predetermined suitable orbit.

Further, with reference to Fig. 2, we assume that an external disturbance indicated by a letter D, such as a temporary incidence of sun shine, occurs at a time $t_B$. Due to the disturbance, the room temperature first increases and then decreases due to the action of the feed back loop of the control, as shown by a curve C3. The width tr0 of the temporary peak C3 is the recovery time. It is required for a good air conditioning apparatus to show a recovery curve C3 having a low height and narrow width. For attaining it, it is necessary to make the feedback gain G big. However, as mentioned above, to make the feedback gain excessively big introduces the hunting phenomenon. An ability to maintain the room temperature constant whilst resisting an external disturbance is called the robustness of the air conditioning apparatus. Thus, there has been an obstacle to improving the robustness of the air conditioning apparatus because the feedback gain cannot be increased arbitrarily.

The object of the present invention is to provide a vehicular air conditioning apparatus that conducts a control that does not cause the undesirable hunting phenomenon or the excessive delay in the response of the actual room temperature. For attaining this object, the air conditioning apparatus according to the present invention models and forecasts the room temperature response, and calculates an objective discharge air temperature based on the forecasted response temperature, and controls the actuators (air mix door actuator, clutch, etc.) so as to make the actual room temperature become the forecasted room temperature.

The vehicular air conditioning apparatus according to the present invention, once the set temperature is changed, calculates and forecasts the future temporal changes in the room temperature starting from the present value to the new set value. In actual implementation, the air conditioning apparatus calculates a future response room temperature one computational cycle ahead only. Of course, it is possible to calculate in one time in advance all the future response room temperatures for all of the computation cycles between the starting point and the end point.

A formula for calculating the modelled room temperature orbit can be defined at will and appropriately modified. When the formula is used, the forecasted room temperature gradually and asymptotically approaches the new objective room temperature. So, it is possible to control the actual room temperature to vary by almost maximum speed for each control cycle, since the forecasted room temperature that is used to calculate the objective discharge air temperature does not jump violently for each control cycle. So, since the room temperature is controlled almost most optimally for each of the control cycle, there occurs no hunting or excessive delay in any control cycle from the starting point to the end point of the room temperature.

The control diagram of the air conditioning apparatus of the present invention has the feedback loop that is similar to the conventional one. As was explained above, since the air conditioning apparatus according to the present invention conducts an adequately suppressed control of the room temperature for each of the control cycle, it is possible to set the value of the feedback gain greater than the conventional apparatus. As a result, it is possible to shorten the recovery time and to suppress the height of the room temperature deviation that is caused by an external disturbance.

Other objects, features, and advantages of this invention will be understood from the following description of preferred embodiments with reference to the drawings, in which:

Fig. 1 is a control diagram of the conventional air conditioning apparatus;
Fig. 2 is a graph showing the characteristic response exhibited by the control of Fig. 1;
Fig. 3 is a schematic illustration of the hardware of an air conditioning apparatus according to the present invention;
Fig. 4 is a control diagram of the air conditioning apparatus of Fig. 3;
Fig. 5 is a calculation diagram of the air conditioning apparatus of Fig. 3;
Fig. 6 is a graph showing an algorithm for obtaining successive objective response temperatures; and
Fig. 7 is a graph showing the characteristic response exhibited by the control of Fig. 4.

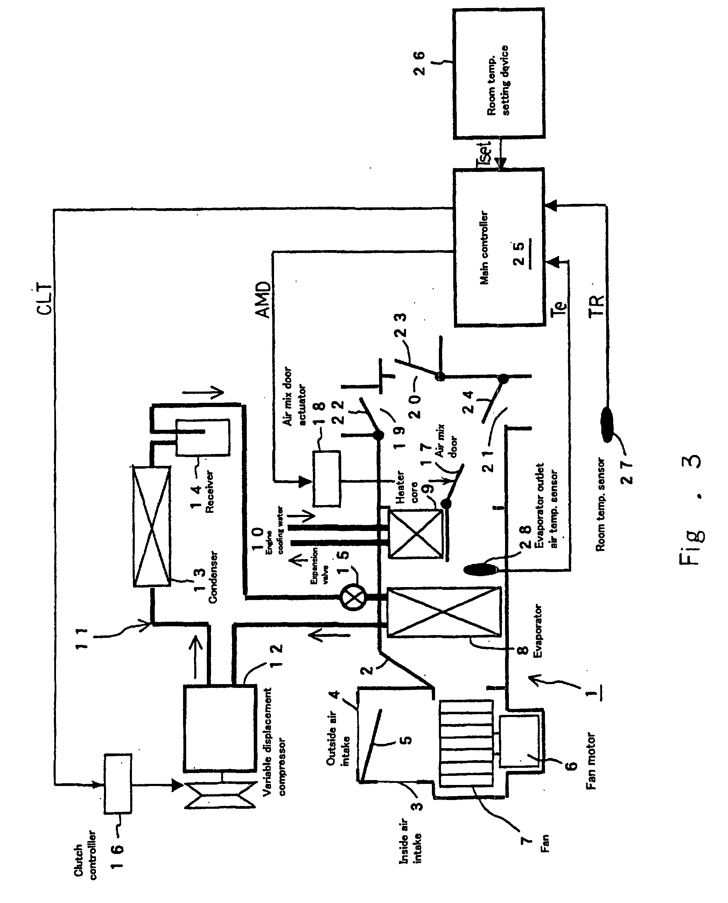

In Fig. 3, a vehicular air conditioning apparatus 1 according to one embodiment of the present invention is shown. This vehicular air conditioning apparatus 1 comprises mainly a water circuit 10 in which an engine cooling water circulates, a refrigeration circuit 11 in which a refrigerant circulates, an air duct 2, and a main controller 25.

The water circuit 10 comprises a not shown vehicular engine and a heater core 9 provided in the air duct 2. In the water circuit 10 the engine cooling water is circulated. The engine cooling water is heated in the engine, and transfers that heat to air flowing in the air duct 2.

The refrigeration circuit 11 comprises a variable displacement compressor 12, a condenser 13, a receiver 14, an expansion valve 15, and an evaporator 8 disposed in the air duct 2. The refrigerant discharges heat at the condenser 13 that is provided outside the vehicular compartment, and absorbs heat at the evaporator 8 that is disposed in the air duct 2 from the air flowing through the air duct 2.

In the air duct 2, a fan 7 which is rotated by a fan motor 6, the evaporator 8, the heater core 9, an air mix door 17, and dampers 22, 23, 24 are disposed in this order. The fan 7 sucks air from either an inside air intake 3 or an outside air intake 4 and blows it toward the direction of the dampers 22, 23, 24 in the air duct 2. A damper 5 selects the air that is sucked and then blown into the air duct 2 by the fan 7, from among the inside air intake 3 and outside air intake 4. The angular position of the damper 5 may be either controlled manually or by the main controller 25. When passing through the evaporator 8, the air is cooled. When passing through the heater core 9 the air is re-warmed. By controlling an angular position of the air mix door 17, it is possible to control the ratio of the amount of the air that passes through the heater core 9 and the amount of the air that bypasses the heater core 9. The air that has been thus temperature-conditioned is then discharged into the compartment of the vehicle via discharge ports 19, 20, 21. The dampers 22, 23, and 24 control the opening degree of the discharge ports 19, 20, 21 respectively.

The compressor 12 can be driven by the engine via a clutch. The main controller 25 sends a signal CLT to a clutch controller 16 to turn on the clutch or turn off the clutch. If the clutch is turned on. then the refrigeration circuit 11 works to cool the evaporator 8. An angular position of the air mix door 17 is controlled by an air mix door actuator 18. The main controller 25 sends a signal AMD that instructs the angular position of the air mix door 17 to the air mix door actuator 18.

Downstream of the evaporator 8, an evaporator outlet air temperature sensor 28 is provided to detect the air temperature that has passed through the evaporator, and it sends a signal Te to the main controller 25. In the vehicular compartment, a room temperature setting device 26 and a room temperature sensor 27 are provided and they send a signal Tset and a signal TR to the main controller 25 respectively. The main controller 25, processing these signals 'Te, TR, and Tset, outputs the signals CLT and AMD for the clutch controller 16 and the air mix door actuator 18.

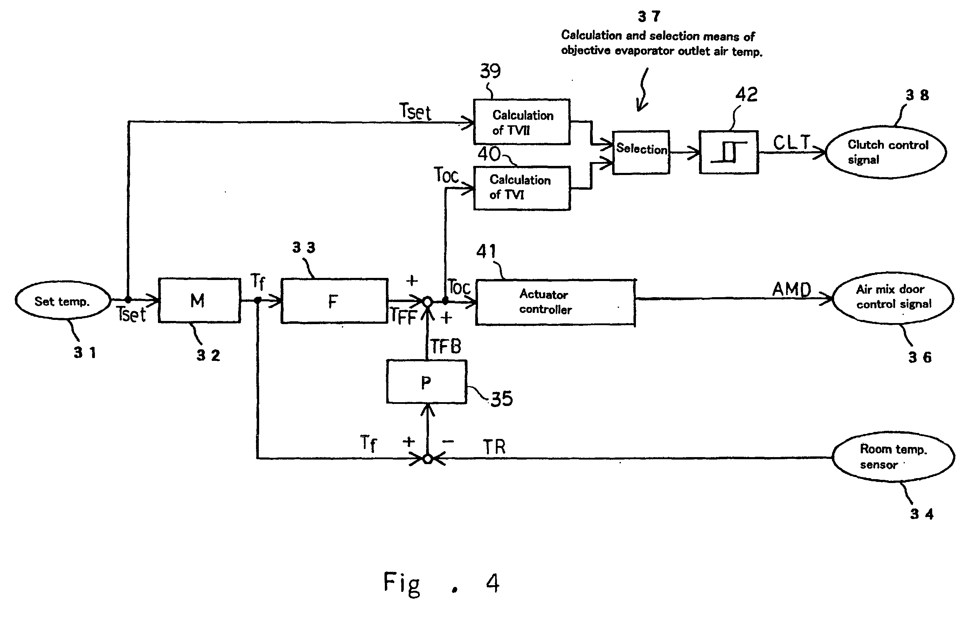

The main controller 25 conducts a control that is shown in Fig. 4. The ovals in the Fig. 4 mean input variables and output variables, and boxes mean calculation/transformation functions.

Tracing from the left side of Fig. 4, an input variable Tset is sent from an oval 31 to a box 32 that represents a modelling function. The box 32 has a function of calculating an objective response temperature Tf one control cycle ahead from the variable Tset and current value of Tf. The function and existence of the box 32 is the key feature of the present invention.

In a box 33 that represents a feed forward control, a variable TFF is calculated from the variable Tf. A difference between an input variable TR sent from an oval 34 and the variable Tf is inputted to a box 35 that represent a proportional control. The box 35 outputs a variable TFB that represents a feed back signal. By an addition of the variable TFF and variable TPB, a variable Toc is made. The variable Toc is inputted to a box 41 that represents an actuator controller, and is then converted into a signal AMD that controls the actual actuator, i.e., the air mix door actuator that corresponds to an oval 36.

A control branch comprising boxes 40, 37, 42 and 38 is equal to a control branch comprising the above-mentioned box 41 and an oval 36. In box 40 a variable TVI is calculated from the variable Toc, whereas in a box 39 a variable TVII is calculated from the variable Tset. In the box 37, the smaller one from among the variables TVI and TVII is selected. Based on the magnitude of the selected variable, a clutch control signal CLT (ON or OFF signal) is made in the box 42. As is shown in the figure, the conversion function of the box 42 may have hysteresis.

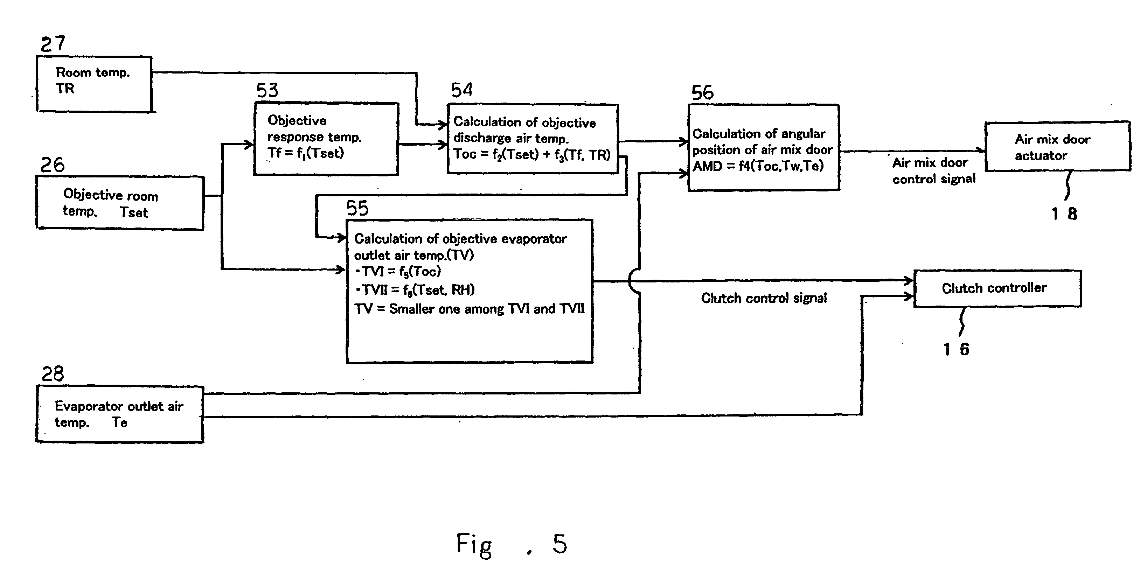

The more concrete calculation procedure for the control of Fig. 4 is shown in Fig. 5. The boxes of Fig. 5 specify component calculations needed for realizing the control of Fig. 4. A box 53 corresponds to the box 32 of Fig. 4. In the box 53 of Fig. 5, the objective response temperature Tf is calculated by a function $f_1(\text{Tset})$. In box 54, the objective discharge air temperature Toc is calculated. Here by the discharged air we mean the air that is discharged from the discharge ports 19, 20, 21 of Fig. 3. Referring back to Fig. 5 again, a function $f_2$ in the box 54 corresponds to the feed forward contribution TFF,. and a function $f_3$ to the feed back contribution TFB of Fig. 4. The Tw in the box 56 is a engine cooling water temperature. The RH in the box 55 is an appropriately chosen constant representing an allowable relative humidity in the vehicle. The functions $f_2$, $f_3$, $f_4$, $f_5$ and $f_6$ written in the boxes 54, 55 and 56 may be composed from linear functions having appropriately chosen coefficients and constants. In this way, from the various variables TR, Tset and Te listed on the left side of Fig. 5, the signals for controlling the air mix door actuator 18 and clutch controller 16 listed on the right side of Fig. 5 are computed.

As pointed out already, the box 53 in Fig. 5 gives the main feature of the present invention. If we express explicitly the function $f_1$ in the box 53, it takes the shape of an asymptotic formula of the objective response temperature Tfn that changes little by little. For example, the function $f_1$ may have a following renewal form.

$$Tf_n = f_1(Tset, Tf_{n-1})$$

$$= \frac{\alpha Tf_{n-1} + \beta Tset}{\alpha + \beta} \tag{1}$$

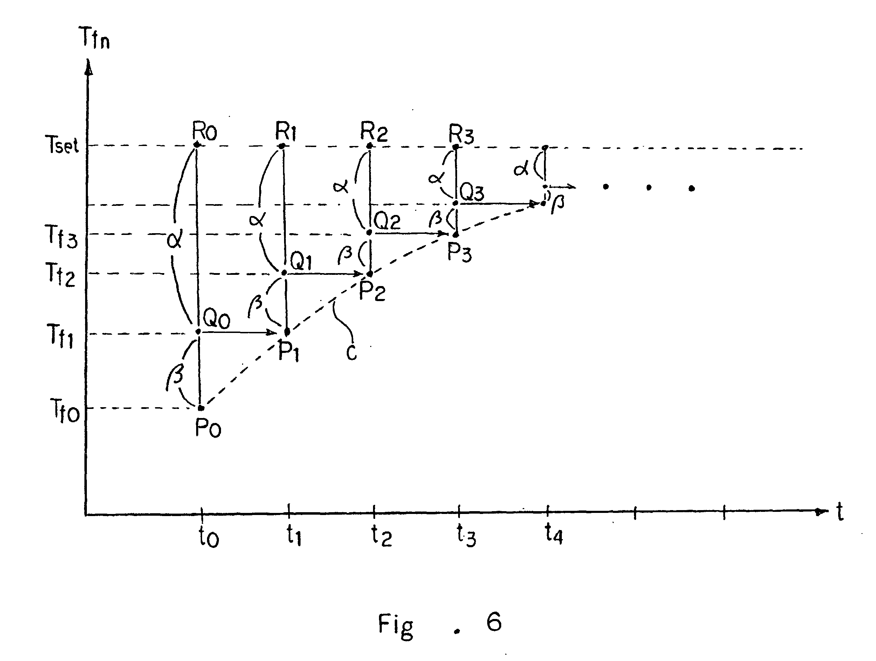

where $\alpha$ and $\beta$ are predetermined constants. This represents an orbit of a model response of the room temperature. The above equation (1) gives an interior division point between $Tf_{n-1}$ and Tset. That is, the ratio of a distance between the interior division point and Tset to a distance between $Tf_{n-1}$ and the internal division point is given by $\alpha : \beta$. If we repeat the renewal procedure, generating interior division points in turn, the objective response temperature $Tf_n$ changes stepwisely little by little as shown in Fig. 6. The point Q0 that is obtained on the first computation timing (the control cycle) t0 is the first interior division point between a point R0 and a point P0. The y-coordinate of the point Q0 gives the y-coordinate of a point P1 for the next computation timing t1. The point Q1 that is obtained on the second computation timing t1 is the second interior division point between a point R1 and the point P1. The y-coordinate of the point Q1 gives the y-coordinate of a point P2 for the next computation timing t2. The point Q2 that is obtained on the third computation timing t2 is the third interior division point between point a R2 and the point P2. The y-coordinate of the point Q2 gives the y-coordinate of a point P3 for the next computation timing t3. And so on. In this way, the model response is computed as a series $\{Tf_0, Tf_1, Tf_2,...\}$ Thus, the curve C that is formed by connecting the successive points P0, P1, P2,..., represents the orbit of the model response.

With reference to Fig. 6, in the conventional control, thus far, a control is conducted so as to change the room temperature aiming at the point R0 directly from the point P0 at one stroke at the control timing to. So, the magnitude of the room temperature correction, i.e., the distance between the point R0 and P0 that is to be controlled at the control timing to, is great. So, the conventional control cannot bring a predictable definite change in the room temperature at next control timing ti. That is, the course of the orbit of the room temperature deviates from a desirable one. In other words, a hunting phenomenon or a excessive delay will occur in the resultant behaviour of the room temperature orbit. On the other hand, in the control of the present invention, a control is conducted so as to change the room temperature aiming at the point Q0 from the point P0 at the control timing t0. So, the magnitude of the room temperature correction, i.e., the distance between the point Q0 and P0 that is to be controlled at the control timing t0, is smaller than the distance between R0 and P0. So, the control of the present invention can securely bring a predictable definite change in the room temperature at next control timing t1. That is, the next model point P1 is almost certainly attained on the next control timing t1. In other words, a desirable course of the orbit of the room temperature can be secured for the segment between the control timings to and t1. At control timing t1, a control is conducted so as to change the room temperature aiming at the point Q1 from the point P1. So, the magnitude of the room temperature correction, i.e., the distance between the point Q1 and P1 that is to be controlled at the control timing t2, becomes further smaller than at the preceding control timing t0. So, the control of the present invention can again bring securely a predictable definite change in the room temperature on next control timing t2. That is, a desirable course of the orbit of the room temperature can be secured for the segment between the control timings t1 and t2. At control timings t2, t3, t4, and so on, the same situation continues to occur. In this manner, it is possible to realize securely the actual room temperature that is equal to the calculated objective response temperatures $Tf_0$, $Tf_1$, $Tf_2$, ..., for each control timing t0, t1, t2. Thus, it is possible to realize a modelled room temperature response from the starting point to the end point (the curve C in Fig. 6) that is designed in advance. Being different from the conventional control in this way, the control of the air conditioning apparatus of the present invention can afford always stable and superior response in the room temperature change that is independent of the various thermal conditions in the vehicular compartment.

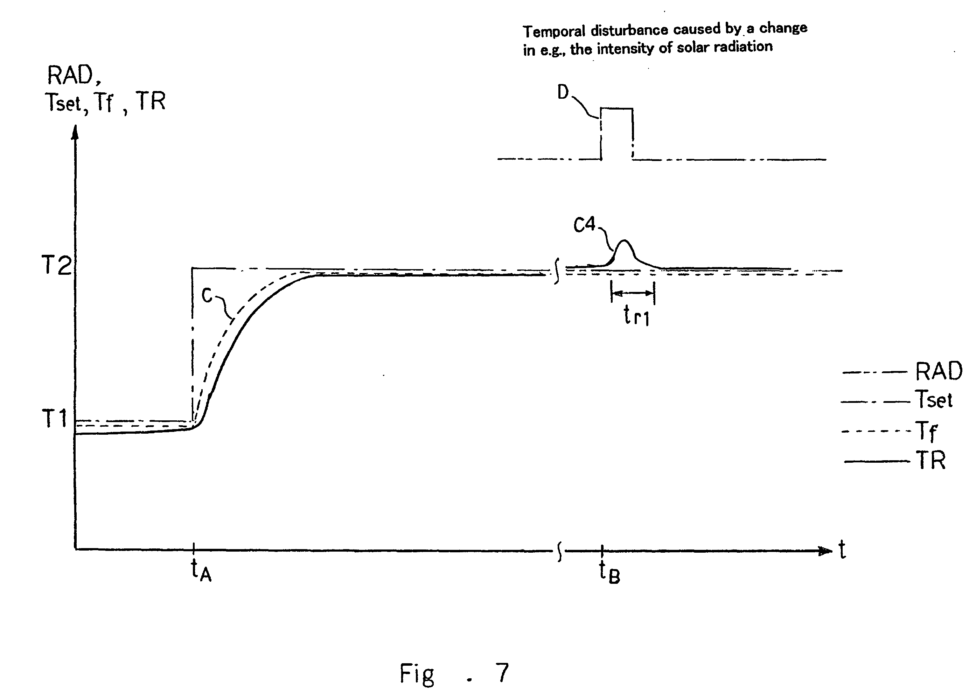

In Fig. 7, a graph of a response characteristic of the control of the present invention is shown. The ordinate is the temperature and an intensity of solar radiation, and the abscissa is the time. We assume that at time $t_A$ the objective room temperature is changed from T1 to T2. As explained above, since the control of the air conditioning apparatus of the present invention can perform almost the best control on the room temperature for each successive control cycles, the resultant actual room temperature TR approaches quite quickly and smoothly and stably to the new set objective room temperature T2, with no hunting behaviour and excessive delay. The resultant course of the actual room temperature orbit which is depicted by a solid line is almost identical to the designed course depicted by a broken line C which is defined and calculated by the equation (1) of the response model that the main controller has.

Further, with reference to Fig. 7, we assume that an external disturbance indicated by a letter D, such as a temporary incidence of a sun shine, occurs at a time $t_B$. Due to the disturbance, the room temperature first increases and then decreases due to the action of the feed back loop of the control, as shown by a curve C4. The width tr1 of the temporary peak C4 is the recovery time. As is mentioned earlier, a great value can be assigned for the feed back gain of the control of the air conditioning apparatus of the present invention. Therefore it is possible for the air conditioning apparatus of the present invention to show a recovery response curve like a curve C4 that has a lower height and narrower width than the curve C3 of Fig. 2. Thus, the robustness of the air conditioning apparatus is effectively increased because one can assign for the feed back gain a considerably big value.

Although the present invention has been described in detail in connection with preferred embodiment, the invention is not limited thereto. It will be understood by those skilled in the art that variations and modifications may be made within the scope of this invention, as defined by the following claims.

**Claims**

**1.** A vehicular air conditioning apparatus (1) comprising, an air duct (2);

a fan (7) disposed in said air duct (2);
an evaporator (8) disposed in said air duct (2);
a heater core (9) disposed in said air duct (2);
an air mix door (17) disposed at immediately downstream position from said heater core (9);
a refrigeration circuit (11) consisting of a variable displacement compressor (12) which can be driven by a vehicular engine via a clutch, a condenser (13), a receiver (14), an expansion valve (15), and said evaporator (8);
a water circuit (10) consisting of said engine and said heater core (9);
a temperature sensor (28) that detects the temperature (Te) of air discharged from said evaporator (s);
a temperature sensor (27) that detects the room temperature (TR) in a compartment of vehicle;
a room temperature setting device (26) that outputs objective room temperature (Tset);
a main controller (25) that processes these signals (Te, TR, Tset) and outputs control signals (AMD, CLT) to an air mix door actuator (18) and a clutch controller (16) **characterized in That**:

said main controller (25) has an objective response temperature calculating means (53), an objective discharge air temperature calculating means (54), an objective evaporator outlet air temperature calculating means (55) and an air mix door position calculating means (56), wherein said objective response temperature calculating means (53) calculates a model response temperature ($Tf_n$) one control cycle ahead from a current model response temperature ($Tf_{n-1}$) and a set objective room temperature (Tset) set in said room temperature setting device (26), and said objective response temperature calculating means (53) transfers the result ($Tf_n$) to said objective discharge air temperature calculating means (54) which calculates an objective discharge air temperature (Toc) from said ($Tf_n$), and said objective evaporator outlet air temperature calculating means (55) and said air mix door position calculating means (56) output control signals (CLT, AMD) to said clutch controller (16) and said air mix door actuator (18) based on a value of said (Toc).

2. A vehicular air conditioning apparatus (1) of claim 1, wherein said objective response temperature calculating means (53) calculates said objective response temperature ($Tf_n$) one control cycle ahead from current objective response temperature ($Tf_{n-1}$) and said set room temperature (Tset) by a following asymptotic equation,

$$Tf_n = \frac{\alpha\, Tf_{n-1} + \beta\, Tset}{\alpha + \beta}$$

where $\alpha$ and $\beta$ are constants.

3. A vehicular air conditioning apparatus (1) of claim 1, wherein said objective discharge air temperature calculating means (54), said objective evaporator outlet air temperature calculating means (55) and said air mix door position calculating means (56) conduct respective calculations using linear functions.

**Patentansprüche**

1. Fahrzeug-Klimaanlagenvorrichtung (1), welche aufweist: einen Luftkanal (2);
einen Ventilator (7), der in dem Luftkanal (2) angeordnet ist;
einen Verdampfer (8), der in dem Luftkanal (2) angeordnet ist;
einen Heizerkern (9), der in dem Luftkanal (2) angeordnet ist;
eine Luftmischtüre (17), die an einer unmittelbar stromabwärtigen Position von dem Heizerkern (9) angeordnet ist;
einen Kühlkreislauf (11), der von einem verstellbaren Kompressor (12), der von einem Fahrzeugmotor über eine Kupplung angetrieben werden kann, einem Kondensator (13), einem Druckbehälter (14), einem Expansionsventil (15) und dem Verdampfer (8) gebildet wird;
einen Wasserkreislauf (10), der von dem Motor und dem Heizerkern (9) gebildet wird;
einen Temperatursensor (28), der die Temperatur (Te) von Luft, die von dem Verdampfer (s) ausgelassen wird, erfasst;
einen Temperatursensor (27), der die Raumtemperatur (TR) in einem Abteil eines Fahrzeuges erfasst;
eine Raumtemperatur-Einstellvorrichtung (26), die eine Ziel-Raumtemperatur (Tset) ausgibt;
eine Hauptsteuerung (25), die diese Signale (Te, TR, Tset) verarbeitet und Steuersignale (AMD, CLT) an einen Luftmischtürbetätiger (18) und eine Kupplungssteuerung (16) ausgibt, **dadurch gekennzeichnet, dass**
die Hauptsteuerung (25) ein Ziel-Ansprechtemperatur-Berechnungsmittel (53), ein Ziel-Auslasslufttemperatur-Berechnungsmittel (54), ein Ziel-Verdampferauslass-Lufttemperatur-Berechnungsmittel (55) und ein Luftmischtürpositions-Berechnungsmittel (56) aufweist, wobei das Ziel-Ansprechtemperatur-Berechnungsmittel (53) eine Modell-Ansprechtemperatur ($Tf_n$) einen Steuerzyklus voraus aus einer aktuellen Modell-Ansprechtemperatur ($Tf_{n-1}$) und einer eingestellten Zielraumtemperatur (Tset), die in der Raumtemperatur-Einstellvorrichtung (26) eingestellt ist, berechnet, und wobei das Ziel-Ansprechtemperatur-Berechnungsmittel (53) das Ergebnis ($Tf_n$) an das Ziel-Auslasslufttemperatur-Berechnungsmittel (54), das eine Ziel-Auslasslufttemperatur (Toc) aus dem ($Tf_n$) berechnet, übermittelt, und das Ziel-Verdampferauslass-Lufttemperatur-Berechnungsmittel (55) und das Luftmischtürpositions-Berechnungsmittel (56) Steuersignale (CLT, AMD) an die Kupplungssteuerung (16) und den Luftmischtürbetätiger (18), basierend auf einem Wert des (Toc), ausgeben.

2. Fahrzeug-Klimaanlagenvorrichtung (1) nach Anspruch 1, bei der das Ziel-Ansprechtemperatur-Berechnungsmittel (53) die Ziel-Ansprechtemperatur ($Tf_n$) einen Steuerzyklus voraus aus einer aktuellen Ziel-Ansprechtemperatur ($Tf_{n-1}$) und der eingestellten Raumtemperatur (Tset) durch nachfolgende asymptotische Gleichung berechnet,

$$Tf_n = \frac{\alpha\, Tf_{n-1} + \beta\, Tset}{\alpha + \beta}$$

wobei $\alpha$ und $\beta$ Konstanten sind.

3. Fahrzeug-Klimaanlagenvorrichtung (1) nach Anspruch 1, bei der das Ziel-Auslasslufttemperatur-Berechnungsmittel (54), das Ziel-Verdampferauslass-Lufttemperatur-Berechnungsmittel (55) und das Luftmischtürpositions-Berechnungsmittel (56) entsprechende Berechnungen durchführen, wobei sie lineare Funktionen verwenden.

**Revendications**

1. Dispositif de climatisation pour véhicule (1) comprenant :

    une gaine de ventilation (2) ;
    un ventilateur (7) disposé dans la gaine de ventilation (2) ;
    un évaporateur (8) disposé dans la gaine de ventilation (2) ;
    un radiateur de chauffage (9) disposé dans la gaine de ventilation (2) ;
    une porte de mélange d'air (17) disposée dans une position immédiatement en aval du radiateur de chauffage (9) ;
    un circuit de refroidissement (11) comprenant un compresseur à cylindrée variable (12) qui peut être entraîné par un moteur de véhicule via un embrayage, un condensateur (13), un réservoir (14), une soupape d'expansion (15), et l'évaporateur (8) ;
    un circuit d'eau (10) comprenant le moteur et le radiateur de chauffage (9) ;
    un capteur de température (28) qui détecte la température (Te) de l'air ventilé de 1' (des) évaporateur (s) ;
    un capteur de température (27) qui détecte la température d'habitacle (TR) dans l'habitacle d'un véhicule ;
    un dispositif de réglage de la température d'habitacle (26) qui produit une température d'habitacle de consigne (Tset) ;
    un contrôleur principal (25) qui traite ces signaux (Te, TR, Tset) et génère des signaux de commande (AMD, CLT) vers un actionneur de porte de mélange d'air (18) et un contrôleur d'embrayage (16),

    **caractérisé en ce que**
    le contrôleur principal (25) comprend un moyen de calcul de température de réponse cible (53), un moyen de calcul de la température cible de l'air de ventilation (54), un moyen de calcul de la température cible de l'air en sortie de l'évaporateur (55) et un moyen de calcul de la position de la porte de mélange d'air (56), dans lequel le moyen de calcul de la température de réponse cible (53) calcule une température de réponse type ($Tf_n$) d'un cycle de commande à partir d'une température de réponse type actuelle ($Tf_{n-1}$) et une température d'habitacle de consigne cible (Tset) dans le dispositif de réglage de la température d'habitacle (26), et le moyen de calcul de la température de réponse cible (53) transfère le résultat ($T_{fn}$) vers le moyen de calcul de la température cible de l'air de ventilation (54) qui calcule une température cible de l'air de ventilation (Toc) à partir de la ($T_{fn}$), et le moyen de calcul de la température cible de l'air en sortie de l'évaporateur (55) et le moyen de calcul de la position de la porte de mélange d'air (56) génèrent des signaux de commande (CLT, AMD) vers le contrôleur d'embrayage (16) et l'actionneur de la porte de mélange d'air (18) à partir d'une valeur de la température cible d'air (Toc).

2. Dispositif de climatisation pour véhicule (1) selon la revendication 1,
    dans lequel
    le moyen de calcul de la température de réponse cible (53) calcule la température de réponse cible ($T_{fn}$) d'un cycle de commande à partir de la température de réponse cible actuelle ($T_{fn-1}$) et la température d'habitacle de consigne (Tset) par l'équation asymptotique suivante :

$$Tf_n = \frac{\alpha\,Tf_{n-1} + \beta\,Tset}{\alpha + \beta}$$

où $\alpha$ et $\beta$ sont des constantes.

3. Dispositif de climatisation pour véhicule (1) selon la revendication 1, dans lequel
le moyen de calcul de la température cible de l'air de ventilation (54), le moyen de calcul de la température cible de l'air en sortie de l'évaporateur (55) et le moyen de calcul de la position de la porte de mélange d'air (56) produisent des calculs respectifs au moyen de fonctions linéaires.

Fig . 1
(PRIOR ART)

Temporal disturbance caused by a change
in e.g., the intensity of solar radiation

Fig . 2

(PRIOR ART)

CLT

Clutch controller 16

11

12 Variable displacement compressor

13 Condenser

14 Receiver

10 Engine cooling water

15 Expansion valve

18 Air mix door actuator

AMD

22

19

17 Air mix door

9

Heater core

23

20

24

21

28 Evaporator outlet air temp. sensor

25 Main controller

Tset

26 Room temp. setting device

Te

TR

27 Room temp. sensor

Outside air intake 4

5

Inside air intake 3

6 Fan motor

7 Fan

8 Evaporator

2

1

Fig . 3

**37**

Calculation and selection means of
objective evaporator outlet air temp.

**39**

Tset → | Calculation of TVII | → **40**

Toc → | Calculation of TVI |

→ | Selection | → **42** | ⎍ | → CLT → ( Clutch control signal ) **38**

**33**

( Set temp. ) **31** → Tset → | M | → Tf → | F | → +

**32**

Toc → | Actuator controller | **41** → AMD → ( Air mix door control signal ) **36**

TFF → + → Toc

TFB → | P | **35**

Tf + → − → TR ← ( Room temp. sensor ) **34**

Fig . 4

12

EP 1 277 606 B1

**27**

Room temp. TR

**53**

Objective response temp. Tf = f$_1$(Tset)

**26**

Objective room temp. Tset

**54**

Calculation of objective discharge air temp. Toc = f$_2$(Tset) + f$_3$(Tf, TR)

**56**

Calculation of angular position of air mix door AMD = f4(Toc,Tw,Te)

Air mix door control signal

Air mix door actuator

**1 8**

**55**

Calculation of objective evaporator outlet air temp.(TV)
- TVI = f$_5$(Toc)
- TVII = f$_8$(Tset, RH)
TV = Smaller one among TVI and TVII

Clutch control signal

Clutch controller

**1 6**

**28**

Evaporator outlet air temp. Te

Fig . 5

Fig. 6

EP 1 277 606 B1

Temporal disturbance caused by a change
in e.g., the intensity of solar radiation

Fig . 7